# EUROPÄISCHE PATENTANMELDUNG

(11) **EP 2 281 636 A1**
(43) Veröffentlichungstag der Anmeldung: **09.02.2011**
(21) Anmeldenummer: 09816504.6
(22) Anmeldetag: 08.09.2009
(51) Int. Cl.: B03B 9/06, C22B 11/00

(54) **VERFAHREN ZUR HERSTELLUNG EINES SCHÜTTGUTKONZENTRATS**

(30) Priorität: 29.09.2008 RU 2008138814
(71) Anmelder: Zakrytoe Akcionernoe Obshestvo "Uralkaliy Technologiya", Permsky Krai 618426 (RU)
(72) Erfinder: SMETANNIKOV, Andrei Filippovich, Perm 614013 (RU); SINEGRIBOV, Viktor Andreevich, Moscow 125413 (RU); ONOSOV, Dmitriy Valentinovich, Perm 614013 (RU); CHISTYAKOV, Aleksey Alekseevich, Permski krai 618416 (RU); SINEGRIBOV, Viktor Andreevich, Moscow 125413 (RU); NOVIKOV, Pavel Yurievich, Moscow 121471 (RU); KRASNOSHTEIN, Arkadiy Evgenievich, Perm 614039 (RU)
(74) Vertreter: Jeck, Anton
(86) Internationale Anmeldenummer: PCT/RU2009/000456
(87) Internationale Veröffentlichungsnummer: WO 2010/036143

(57) **Zusammenfassung**

Die Erfindung betrifft ein Verfahren zur Herstellung eines Aufbereitungssammelkonzentrats zur Ausbringung von Edelmetallen aus Ton- und Salzabfällen (Schlämmen) von Betrieben, welche Kalium-Magnesiumerze und Steinsalz verarbeiten. Das Verfahren zur Herstellung eines Sammelkonzentrats zur Ausbringung von Edelmetallen umfasst eine Dreistufenbehandlung der Schlämme in einem Hydrozyklon unter Ausscheidung des Konzentrats. Das nach der Behandlung im Hydrozyklon hergestellte Sammelkonzentrat stellt eine Mischung von Absetz- und flotierbarem Material im Verhältnis Feststoff : Flüssigkeit von 1 : 1 dar und wird verfahrensgemäß entwässert, sich etwas abtrocknen lassen, granuliert und danach getrocknet.

## Beschreibung

Die Erfindung betrifft ein Verfahren zur Herstellung eines Sammelkonzentrats nach dem Oberbegriff des Anspruchs.

Die Erfindung betrifft ein Verfahren zur Herstellung eines Aufbereitungskonzentrats zur Ausbringung von Edelmetallen aus Ton- und Salzabfällen (Schlämmen) von solchen Werken, die Kalium-Magnesiumerze und Steinsalz nach einem Verfahren schmelz- und hydrometallurgischer Verhüttung verarbeiten.

Aus dem Stand der Technik sind die ihrem technischen Wesen der Erfindung nahe liegenden Verfahren zur Entwässerung eines Materials bekannt (Handbuch für Erzaufbereitung. Sonder- und Hilfsvorgänge. Moskau, NEDRA, 1983, Seiten 77, 78, 96-98, 100, 102, 108, 109. A.A. Abramov, S.B. Leonov. Aufbereitung der Buntmetallerze. Moskau. Nedra. 1991, Seiten 35, 37). Diese Verfahren stellen eine Entwässerung von verschiedenkörnigen Materialien in Klassiergeräten, Filterzentrifugen, Unterdruckfiltern, Filterpressen, Trockenöfen usw. dar. Die genannten Verfahren sind für eine maximal mögliche Abtrennung der flüssigen Phase von den Feststoffen für Materialien mit einer bestimmten Korngröße ausgelegt. Jedoch ist keines dieser Verfahren einzeln für eine Abscheidung der flüssigen Phase von "Schlämmen" geeignet, weil die stoffliche Zusammensetzung sowie die Korngrößenverteilung des Materials immer kompliziert und fallspezifisch sind. Die Korngröße liegt bei 70 % des Materials unter 0,1 mm und bei 20 % des Materials unter 0,044 mm. Die oft angewendeten Filterzentrifugen stellen dagegen eine Restfeuchte von unter 5 % bei einer Komgröße des Materials von über 1 mm sicher. Folglich wird in unserem Fall ein Teil des Materials in das Filtrat übergehen. Zusammen damit wird ein Teil der nutzvollen Komponente verloren gehen. Aus den gleichen Gründen können zum Beispiel keine Filterpressen angewendet werden. Die direkte Anwendung von Trockenöfen ohne Vorentwässerung ist auch nicht möglich. Darum ist für die Entwässerung von Schlämmen nach dem Schleudern eine Gesamtheit an Entwässerungstechniken erforderlich, welche durch einen Komplex an Geräten und Einrichtungen ausgeführt werden.

Aus dem Patent Nr. 2256504 (veröffentlicht am 20.07.2005) ist ein Verfahren zur Herstellung von Konzentrat aus Ton- und Salzabfällen der Werke bekannt, die Kalium-Magnesiumerze und Steinsalz zur Ausbringung von Edelmetallen verarbeiten. Dieses Verfahren umfasst wenigstens eine Zweistufenbehandlung der Schlämme im Hydrozyklon unter Ausscheidung von Konzentrat. Dabei erfolgt die Behandlung im Hydrozyklon in zwei oder drei Stufen. Das Konzentrat der Hydrozyklone stellt eine feste Phase der Schlämme - den unlöslichen Rückstand - dar. Die Schlämme kommen zur Behandlung im Hydrozyklon mit einem Verhältnis Feststoff : Flüssigkeit = 1 : 3 an. In der ersten Behandlungsstufe im Hydrozyklon werden das Konzentrat als großkörniger unlöslicher Rückstand und der Abfluss des ersten Hydrozyklons als feinkörniger unlöslicher Rückstand und Salzlösung ausgeschieden. Der Abfluss des ersten Hydrozyklons wird zu einer Trübe im Verhältnis Feststoff : Flüssigkeit = 1 : 8 weiterverarbeitet. Danach wird er zur zweiten Stufe der Behandlung im Hydrozyklon zur Nachreinigung gefördert. Dabei wird ein Konzentrat in Form einer Restfraktion des unlöslichen Rückstands von Schlamm und dem Abfluss des zweiten Hydrozyklons als Salzlösung ausgeschieden. Nachfolgend werden die durch die Behandlung im Hydrozyklon ausgeschiedenen Konzentrate vereinigt. Wenn im Abfluss des zweiten Hydrozyklons ein zu hoher Restgehalt an unlöslichem Rückstand vorliegt, so wird der Abfluss des zweiten Hydrozyklons zusätzlich einer dritten Stufe der Behandlung im Hydrozyklon ausgesetzt. Auf diese Weise werden die Schlämme der chemischen Anlagen (für die Gewinnung der Kaliumsalze) und Flotationsanlagen verarbeitet.

Der Mangel dieses Verfahrens ist ein ziemlich hoher Feuchteanteil und die Unmöglichkeit, eine weitere schmelz- und hydrometallurgische Verhüttung vorzunehmen.

Aus dem Patent RU 2284221 (veröffentlicht am 27.09.2006) ist ebenfalls ein Verfahren zur Herstellung von Sammelkonzentrat aus Ton- und Salzabfällen der Werke, die Kalium-Magnesiumerze und Steinsalz verarbeiten, bekannt. Dieses Verfahren umfasst eine Behandlung im Hydrozyklon, die in drei Stufen durchgeführt wird. Das Sammelkonzentrat der Hydrozyklone (die Trübe) stellt eine Festphase dar, die aus einem Absetz- und einem flotierbaren Teil besteht. Der flotierbare Teil stellt den wasserunlöslichen Rückstand der Schlämme und die flüssige Phase dar. Die Trübe hat ein Verhältnis Feststoff : Flüssigkeit von 1 : 1. Der Restgehalt der K- und Na-Salze beträgt max. 15 %.

Der Nachteil dieses Verfahrens ist ebenfalls ein zu hoher Feuchtegehalt und die Unmöglichkeit, einen weiteren schmelz- und hydrometallurgischen Verhüttungsvorgang vorzunehmen.

Es ist Aufgabe der Erfindung, die Trübe nach der Behandlung im Hydrozyklon in ein Konzentrat zur Aufbereitung in Form von Trockengranulat (Pellets) umzuwandeln. Diese Granulate müssen für eine schmelz- und hydrometallurgische Verhüttung gut geeignet sein und die Eigenschaften der primären Schlämme beinhalten, d. h. die gesamte Menge der Edelmetalle und die Gesamtmenge der festen Salze 20 ± 5 % müssen erhalten bleiben.

Die gestellte Aufgabe wird durch die Merkmale des Anspruchs gelöst.

Das Verfahren zur Herstellung von Sammelkonzentrat zur Ausbringung von Edelmetallen umfasst eine Dreistufenbehandlung der Schlämme im Hydrozyklon, so dass ein Konzentrat ausgeschieden wird. Das nach der Behandlung im Hydrozyklon hergestellte Sammelkonzentrat stellt eine Mischung von Absetz- und flotierbarem Material in einem Verhältnis Feststoff : Flüssigkeit von 1 : 1 dar. Dieses Sammelkonzentrat wird entwässert, etwas trocknen gelassen, granuliert und danach getrocknet.

Die kennzeichnenden Merkmale dieses Verfahrens gegenüber dem bekannten Stand der Technik bestehen darin, dass das nach der Behandlung im Hydrozyklon hergestellte Sammelkonzentrat eine Mischung von Absetz- und flotierbarem Material im Verhältnis Feststoff : Flüssigkeit von 1 : 1 darstellt und dass dieses Sammelkonzentrat entwässert, sich etwas abtrocknen lassen, granuliert und danach getrocknet wird

Dank dem Vorhandensein dieser Merkmale wurde ein Verfahren entwickelt, welches es ermöglicht, das Konzentrat nicht als Trübe im Verhältnis Feststoff : Flüssigkeit von 1 : 1 zu bekommen, sondern das Sammelkonzentrat. Das ist ein Granulat, welches als Hauptmenge Absetz- und flotierbares Material und darüber hinaus natürliche und künstliche Organik aufweist, worin ein beachtlicher Teil der Edelmetalle konzentriert ist.

Das neue Verfahren besteht in der Anwendung eines Komplexes (Gesamtheit) von Einrichtungen für eine stufenweise Entwässerung bis zu einem bestimmten Schwellenwert. Der Schwellenwert ermöglicht es, ein Granulieren durchzuführen, so dass Granulate mit einem Durchmesser von 8 bis 15 mm ausgebildet werden. Anschließend erfolgt eine Nachtrocknung bis zu einer 0,5%igen Feuchte unter Beibehaltung aller Eigenschaften des Ausgangs-schlamms, einschließlich der natürlichen und künstlichen Organik.

Die durch dieses Verfahren erreichten Ergebnisse sind wie folgt:
- die vollständige Erhaltung des unlöslichen Rückstands der Schlämme und der natürlichen und künstlichen Organik,
- die Herstellung eines Konzentrats in Form von Granulat mit einem Feuchtegehalt von 0,5%, einem Granulatdurchmesser von 8 bis 15 mm und mit dem Restanteil an Salz von 20 ± 5 %.

Der unlösliche Rückstand stellt das Konzentrat dar, welches die Verbindungen von Au, Pt, Pd enthält. Als Mineralgrundlage dafür dienen (absteigend) Anhydrit, Dolomit, Quarz, Feldspat, Chlorit, Hydroglimmer, Fe-Oxide, Sulfide und ein organischer Stoff, der durch natürliche und künstliche Organik vertreten ist.

Zur Herstellung des Konzentrats ist Folgendes erforderlich:
1. Die Entfernung von überflüssiger Feuchte ist sicherzustellen. Dafür wird ein Schleudern, ein Rösten (Antrocknen) im Schneckentrockenofen und ein nachfolgendes Granulieren durchgeführt.
2. Mit Hilfe des Granuliervorgangs und der Trocknung in einem Trommelofen wird ein Konzentrat mit einem Salzgehalt von 20 ± 5 % und einer Granulatgröße von 8 bis 10 mm für eine nachfolgende schmelzmetallurgische Verarbeitung bekommen.

Das Verfahren wird in folgender Weise ausgeführt:
Die Trübe (Vorkonzentrat) kommt nach der Behandlung im Hydrozyklon in eine Schleuder (Zentrifuge) hinein. Hier geht der unlösliche Rückstand samt allen vorhandenen Komponenten in den Kuchen, und die Salzlösung geht in das Abwasser der Zentrifuge über. Danach wird der Kuchen in einen Schneckentrockenofen gefördert.
Hier wird das Material bis zu einer Feuchte von 15 % getrocknet. Dann wird das Material mit der Feuchte von 15 % zum Granulieren in einen Düsen-Granulator weitergeleitet. Aus dem Granulator kommt das Material in Form von Granulat mit einem Durchmesser von 8 bis 15 mm heraus. Danach wird es in einen Trommelofen zur Nachtrocknung bis zu einer Feuchte von 0,5 % gefördert.

Die Notwendigkeit der Ausbildung eines solchen Ablaufschemas ist dadurch bedingt, dass die schmelz- und hydrometallurgische Verhüttung in Form von Granulat mit einem Durchmesser von 8 bis 15 mm mit einem Salzgehalt von 20 ± 5 % möglich ist.

Das im Betrieb benutzte Sammelkonzentrat aus Ton- und Salzabfällen der Werke, die Kalium-Magnesiumerze und Steinsalz verarbeiten, stellt die Schlämme der chemischen (für Gewinnung der Kaliumsalze) und Flotationsanlagen mit einer Trübedichte von 1,3 g/cm³ und einem Feststoff- : Flüssigkeits-Verhältnis von 1 : 3 dar. Der Unterschied ist ein hoher Anteil eines organischen Stoffs, welcher durch natürliche und künstliche Organik (Amine und Polyakrylamide) vertreten ist. Der Gesamtanteil an Organik betrug für chemische (für Gewinnung der Kaliumsalze) Werke max. 1,5 %. In unserem Beispiel erreichte der Gesamtanteil der Organik 3 %. Das liegt daran, dass der chemische Aminierungsvorgang (für Gewinnung der Kaliumsalze) durch eine Vakuumkristallisation ergänzt wird. Das stellt den Eintritt von Aminen in die Schlämme sicher und trägt zur Sperrung und Aggregation von organischen Verbindungen der Edelmetalle bei. Der zweite Unterschied bestand darin, dass es erforderlich war, das Konzentrat in Form von Granulat mit einem Durchmesser von 8 bis 15 mm und einem restlichen Salzgehalt von 20 ± 5 % herzustellen.

## Patentansprüche

1. Verfahren zur Herstellung eines Sammelkonzentrats zur Ausbringung von Edelmetallen, einschließlich einer Dreistufenbehandlung der Schlämme in einem Hydrozyklon unterAusscheidung des Konzentrats,
**dadurch gekennzeichnet,**
**dass** das nach einer Behandlung in dem Hydrozyklon hergestellte Sammelkonzentrat eine Mischung von Absetz- und flotierbarem Material im Verhältnis Feststoff : Flüssigkeit von 1:1 darstellt und dass es entwässert, sich etwas abtrocknen lassen, granuliert und danach getrocknet wird.
